# EUROPÄISCHE PATENTSCHRIFT

(11) **EP 0 529 566 B1**
(45) Veröffentlichungstag und Bekanntmachung des Hinweises auf die Patenterteilung: **24.04.1996**
(21) Anmeldenummer: 92114409.3
(22) Anmeldetag: 24.08.1992
(51) Int. Cl.: A01G 3/02

(54) **Gartenschere**
Garden shears
Cisailles de jardinage

(30) Priorität: 30.08.1991 DE 9110771 U
(43) Veröffentlichungstag der Anmeldung: 03.03.1993
(73) Patentinhaber: WOLF-Geräte GmbH Vertriebsgesellschaft KG, D-57518 Betzdorf (DE)
(72) Erfinder: Orthey, Gebhard, W-5241 Nauroth (DE)
(74) Vertreter: Koch, Günther, Dipl.-Ing.

(56) Entgegenhaltungen:
- EP-A- 0 352 982
- DE-A- 3 124 535
- DE-B- 1 180 273
- DE-B- 2 638 740
- FR-A- 1 260 663
- GB-A- 849 399
- US-A- 2 741 843

## Beschreibung

Die Erfindung bezieht sich auf eine Gartenschere mit einem mit Gegenmesser versehenen Obergriff, einem mit einer Messerklinge versehenen Untergriff und mit einem Scherengelenk, das zwei aufeinander ablaufende ringscheibenförmige, mit Messerklinge und Gegenmesser vereinigte Gelenkabschnitte und eine Schraubbuchse mit eingeschraubter Gelenkschraube aufweist und das Scherengelenk Mittel zur Aufnahme der radialen Belastung und hiervon unabhängige Mittel zur Aufnahme der axialen Belastung aufweist. Eine solche, als Baumschere ausgebildete, Gartenschere ist aus der DE-A-1 180 273 bekannt. Diese Baumschere ist auch zum Schneiden von Draht geeignet. Sie weist zu diesem Zweck an dem dem Scherengelenk zugewandten Ende der Schneide der Messerklinge eine etwa halbkreisförmige Ausnehmung auf, in die der Draht eingelegt werden kann, der dann beim Zusammendrücken der Schere von dem Gegenmesser aufgeschnitten oder abgequetscht wird. Dabei besteht die Gefahr, daß der Draht beim Schließen der Schere aus dem Ausschnitt herausrutscht und auf die Schneidkante gelangt, wo der Draht möglicherweise auch noch geschnitten werden kann, aber dabei die Gefahr besteht, daß die Schneidkante beschädigt wird. Die Schneidkante des Messers besitzt nämlich einen relativ flachen Schneidwinkel, der für Holzschnitt angepaßt ist und die hohen Druckkräfte beim Drahtschneiden nicht aushalten kann. Außerdem besteht die Gefahr, daß beim Schließen der Schere der auf die Schneidkante abgerutschte Draht nicht geschnitten, sondern zwischen den Klingen eingeguetscht wird, wodurch das Scherengelenk beschädigt werden kann.

Eine ähnliche Baumschere mit einer zum Einlegen eines Drahtes bestimmten Ausnehmung in der einen Messerklinge zeigt die DE-A-26 38 740.

Die GB-A-849 399 zeigt eine Heckenschere, die benachbart zum Scherengelenk eine Anordnung zum Schneiden dickeren Materials, d.h. zum Schneiden von dickeren Ästen, aufweist. Diese Vorrichtung weist eine Ausnehmung in dem einen Scherenblatt und gegenüberliegend eine weitere Ausnehmung mit einer Schneide mit kleinerem Schnittwinkel auf. Durch die beiderseitigen Ausnehmungen wird zwar die Gefahr des Herausrutschens verringert, jedoch nicht ausgeschaltet. Überdies ist die Anordnung nicht zum Schneiden von Draht bestimmt oder geeignet, sondern angepaßt an das Schneiden dickerer Äste.

Der Erfindung liegt daher die Aufgabe zugrunde, eine gattungsgemäße Gartenschere zu schaffen, mit der auch Draht geschnitten werden kann, ohne daß die Gefahr einer Beschädigung der Messerklingen besteht.

Gelöst wird die gestellte Aufgabe durch die im Kennzeichnungsteil des Patentanspruchs 1 angegebenen Merkmale.

Dadurch, daß der Drahtschneider an eine Stelle verlegt ist, wo zwar die zusammenwirkenden Stahlmesser vorhanden sind, aber ein Abrutschen auf die Schneidklingen der Stahlmesser nicht möglich ist, wird mit Sicherheit eine Beschädigung der Gartenschere verhindert.

Durch die flache Gelenkausbildung gemäß Anspruch 2 wird die Schere besonders benutzerfreundlich, weil hierdurch ein Verhaken verhindert wird, wenn beispielsweise mit dem Drahtschneider ein Maschendraht geschnitten wird. Diese Gelenkausbildung ist natürlich auch günstig, wenn die Schere zum Schneiden von Ästen benutzt wird, weil dann ein Verhaken im Geäst verhindert ist.

Weitere Ausgestaltungen der Erfindung ergeben sich aus den Unteransprüchen 2 bis 7.

Nachstehend wird ein Ausführungsbeispiel der Erfindung anhand der Zeichnung beschrieben. In der Zeichnung zeigen:
Fig. 1 eine Vorderansicht der den Gegenstand der Erfindung bildenden Gartenschere;
Fig. 2 eine Rückansicht zu Fig. 1;
Fig. 3 eine Querschnittsansicht der Schere in größerem Maßstab, geschnitten in Höhe der Gelenkachse;

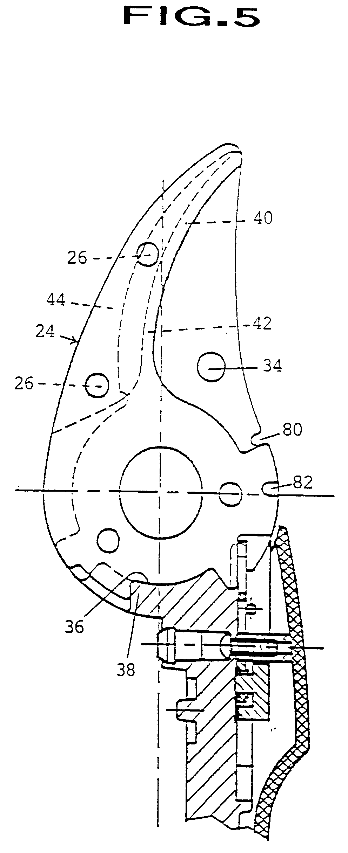

Fig. 4 eine Teilansicht des Untergriffs;
Fig. 5 einen in des Mittelebene der Schere geführten Schnitt.

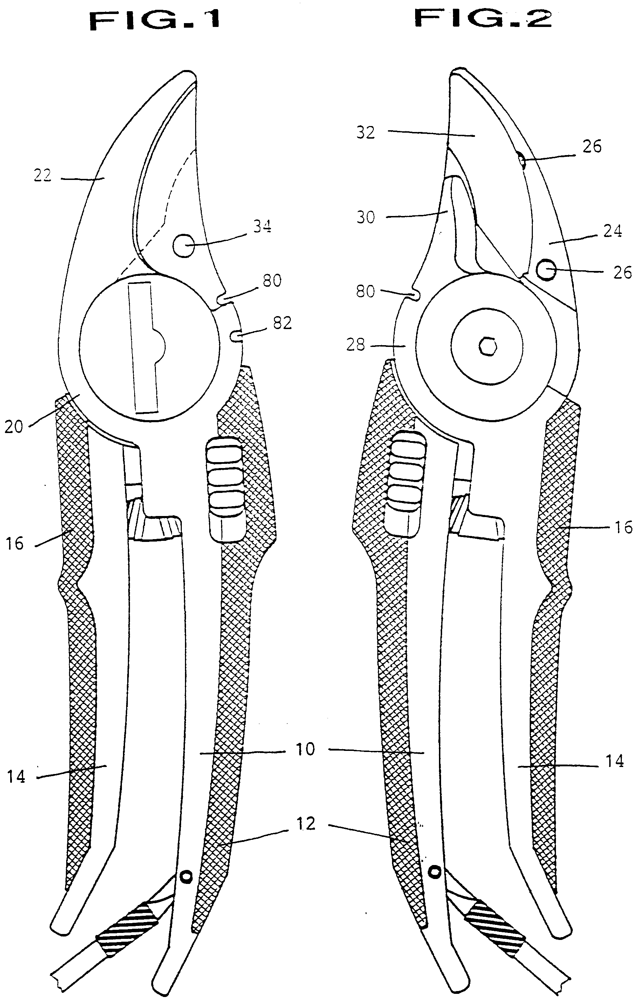

Die Schere weist einen Obergriff 10 mit Griffschale 12 und einen Untergriff 14 mit Griffschale 16 auf. Die Griffe 10 und 14 bestehen aus Aluminium-Druckguß und die Griffschalen aus Kunststoff. Die beiden Griffe sind über ein Scherengelenk mit Gelenkachse 18 verbunden. Beide Griffe sind im Bereich des Gelenkes ringscheibenförmig ausgebildet und über das Gelenk in den Bereich der Schneidmesser vorgezogen.Der ringscheibenförmige Gelenkabschnitt 20 des Obergriffs setzt sich in einem sichelförmigen Abschnitt 22 fort. Im Bereich seiner Abschnitte 20 und 22 trägt der Obergriff das Gegenmesser 24, das in seiner äußeren Umfangsform den Abschnitten 20 und 22 des Obergriffs 10 angepaßt ist. Dieses Gegenmesser 24 ist mit dem Obergriff durch Nieten 26 verbunden. Da dieses Gegenmesser einer geringeren Abnutzung unterworfen ist, kann es mittels dieser Mieten fest am Obergriff 10 angeordnet werden. Erforderlichenfalls ist jedoch unter Lösen der Nieten eine Auswechslung möglich. Die Nieten 26 sind mit dem Obergriff 10 im Druckgußverfahren hergestellt und daher von vorn her (Fig. 1) nicht sichtbar.

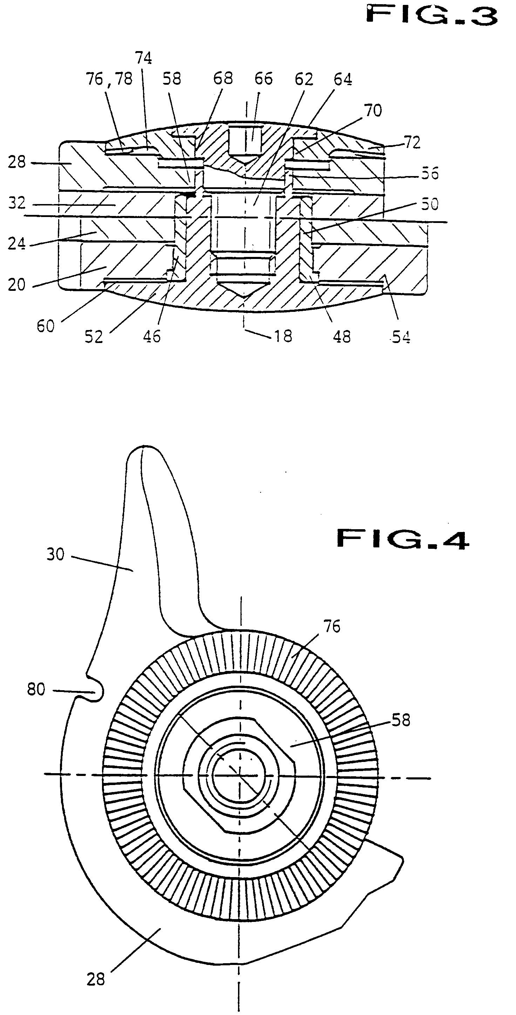

Der Untergriff 14 weist ebenfalls einen ringscheibenförmigen Gelenkabschnitt 28 und einen fingerartigen Fortsatz 30 auf. Von diesen Abschnitten 28 und 30 wird die Messerklinge 32 abgestützt, die mit dem Gegenmesser 24 zusammenarbeitet und im Bereich der Schneide freiliegt, d.h. der fingerartige Fortsatz 30 erstreckt sich, wie insbesondere aus Fig. 2 ersichtlich, nur über den hinteren unteren Abschnitt der Messerklinge 32, so daß der Schneidbereich der Klinge freiliegt und ein unbehindertes Schneiden möglich wird. Der fingerartige Fortsatz 30 ist nach der Klinge hin abgeflacht, wodurch sich eine günstige Führung für das Schneidgut ergibt. Auf der Innenseite trägt der Fortsatz 30 einen angeformten Stift 34, der in ein Loch der Messerklinge 32 einsteht und hiermit eine Formschlußverbindung in Umfangsrichtung herstellt. Eine weitere Formschlußverbindung, die aus der Zeichnung nicht ersichtlich ist, befindet sich im scheibenförmigen Abschnitt auf der gegenüberliegenden Seite. Hier ist die Messerklinge in ihrem ringscheibenförmigen Bereich mit einem Sektorausschnitt versehen, in den ein entsprechender Vorsprung des scheibenförmigen Gelenkabschnitts 24 vorsteht. Diese Formschlußverbindung ist in der gleichen Weise ausgebildet, wie aus Fig. 5 für das Gegenmesser 24 ersichtlich. Dieses weist einen sektorförmigen Ausschnitt 36 auf, in den ein entsprechend geformter Vorsprung 38 der Gelenkscheibe 20 einsteht.

Die Messerklinge 32 liegt dem Gegenmesser 24 im ringförmigen Gelenkabschnitt und in dem in gleicher Ebene liegenden Randabschnitt flächenhaft an, der durch den längs der Kante 42 zurückversetzten Abschnitt 44 gebildet wird.

Das Gelenk weist eine Stahlbuchse 46 auf, die in einer Bohrung des ringscheibenförmigen Gelenkabschnitts 20 des Obergriffs 10 im Preßsitz festgelegt ist. Die Buchse stützt sich mit einem nach außen weisenden Ringflansch 48 an einer entsprechenden Ringstufe des Gelenkabschnitts 20 ab und steht durch die Bohrung des Gegenmessers 24 und die Gelenkbohrung der Messerklinge 32 ein.

Durch die Stahlbuchse 46 ist vom Obergriff her eine Schraubbuchse 50 eingeführt, die einen flachen, nach außen konvexen Kopf 52 aufweist, der in eine ringförmige Vertiefung 54 des ringscheibenförmigen Gelenkabschnitts 20 des Obergriffs eingreift, so daß auf der Oberseite (Fig. 1) der Gelenkabschnitt flach ausgebildet ist und ein Hängenbleiben am Geäst u.s.w. vermieden wird.

Die Schraubbuchse 50 steht, wie aus Fig. 3 ersichtlich, mit ihrem abgeflachten Endabschnitt 56 in ein entsprechend geformtes Loch 58 des ringscheibenförmigen Gelenkabschnitts 28 des Untergriffes 14 formschlüssig ein, so daß die Schraubbuchse 50 mit ihrem Kopf 52 relativ zu dem ringscheibenförmigen Gelenkabschnitt 20 und dem Gegenmesser 24 verdrehbar ist, jedoch drehfest mit dem Untergriff 14 verbunden ist. Um eine freie Drehung zu gewährleisten, ist zwischen der Vertiefung 54 und der Innenseite des Kopfes 52 ein Ringspalt 60 vorgesehen. In das Innengewinde der Schraubbuchse 50 ist eine Gelenkschraube 62 eingeschraubt. Die Gelenkschraube 62 weist einen flachen, nach außen konvexen Kopf 64 auf, der mit einem Innensechskant 66 versehen ist. Unter dem flanschartig nach außen gezogenen Kopf besitzt die Gelenkschraube einen Vierkant 68, mit dem sie formschlüssig in ein entsprechendes Vierkantloch 70 einer Rastscheibe 72 einsteht, die in einer Ringausnehmung 74 des Gelenkabschnitts 28 zu liegen kommt und eine nach außen schwach konvexe Form besitzt, die in die Oberfläche des Abschnitts 28 und die Oberfläche des Kopfes 64 übergeht. Innerhalb der Vertiefung weist der ringscheibenförmige Gelenkabschnitt 28 eine Rastung 76 in Form radial verlaufender Zähne auf, die mit einer entsprechenden Rastung 78 der Rastscheibe 72 zusammenwirkt, die ebenfalls aus radial verlaufenden Zähnen besteht.

Durch dieses flache, im Design integrierte Scherengelenk wird ein Hängenbleiben am Geäst u.s.w. verhindert. Die radiale Belastung wird durch die Stahlbuchse 46 aufgenommen, und die axiale Belastung durch die Schraubbuchse 50, die Gelenkschraube 62 und die Rastscheibe 72. Dadurch werden die Scherkräfte und die Axialkräfte in verschiedenen Bauteilen aufgenommen. Durch die Gelenkschraube 62 ist eine einfache Nachstellbarkeit der Scherenblätter gewährleistet, wobei die Rastung 76 und 78 eine Beibehaltung der eingestellten Lage gewährleistet. Nach Lösen der Gelenkschraube und Abnahme des Untergriffs kann die Messerklinge 32 einfach abgehoben und ausgetauscht oder nachgeschliffen werden.

Zum Schneiden von Draht und dergleichen weist die Messerklinge 32 und hiermit fluchtend der Fortsatz 30 des Gelenkteils 28 einen Einschnitt 80 auf, der mit einem entsprechenden Einschnitt 82 des Obermessers zur Deckung gebracht werden kann. Der so gebildete Drahtschneider 80, 82 liegt demgemäß außerhalb des Schneidbereichs der Messerklinge 32, so daß ein versehentliches Beschädigen der Messer durch Schneiden von Draht mittels der Klinge vermieden wird.

## Patentansprüche

1. Gartenschere mit einem mit Gegenmesser (24) versehenen Obergriff (10), einem mit einer Messerklinge (32) versehenen Untergriff (14) und mit einem Scherengelenk, das zwei aufeinander ablaufende ringscheibenförmige, mit Messerklinge (32) und Gegenmesser (24) vereinigte Gelenkabschnitte (20, 28) und eine Schraubbuchse (50) mit eingeschraubter Gelenkschraube (62) und Mittel (46) zur Aufnahme der radialen Belastung und hiervon unabhängige Mittel zur Aufnahme der axialen Belastung aufweist,
dadurch gekennzeichnet, daß auf der oberen Seite der Schere außerhalb des Schneidbereichs von Messerklinge (32) und Gegenmesser (24) am Umfang der ringscheibenförmigen Gelenkabschnitte (20, 28) von Obergriff (10) und Untergriff (14) je ein Einschnitt (80 bzw. 82) angeordnet ist, die zur Deckung gebracht werden können und als Drahtschneider wirken.

2. Gartenschere nach Anspruch 1,
dadurch gekennzeichnet, daß die Mittel zur Aufnahme der axialen Belastung von tellerförmigen Köpfen (52, 64) von Schraubbuchse (50) bzw. Gelenkschraube (62) gebildet sind, deren schwach gekrümmte konvexe Oberfläche in die Oberfläche der ringscheibenförmigen Gelenkabschnitte (20, 28) übergeht, daß eine Rastscheibe (72) vom Kopf (64) der Spannschraube axial gegen den ringscheibenförmigen Gelenkabschnitt (28) verspannt ist, daß diese Ringscheibe am äußeren Umfang eine Rastung (76) trägt, die mit einer Rastung (78) des ringscheibenförmigen Gelenkabschnitts (28) zusammenwirkt und daß die Oberfläche der Rastscheibe (72) mit der Oberfläche des Kopfes (64) den schwach konvex gekrümmten Gelenkteller bildet, der in den Gelenkabschnitt (28) übergeht.

3. Gartenschere nach Anspruch 1,
dadurch gekennzeichnet, daß die Mittel zur Aufnahme der radialen Belastung aus einer Stahlbuchse (46) bestehen, die in eine konzentrische Bohrung des ringscheibenförmigen Gelenkabschnitts (20) des Obergriffs eingepreßt ist und das Gegenmesser (24) und die Messerklinge (32) lagert.

4. Gartenschere nach Anspruch 2,
dadurch gekennzeichnet, daß die Stahlbuchse (46) mit einem Flansch (48) in einer Stufenausnehmung des ringscheibenförmigen Gelenkabschnitts (20) verankert ist.

5. Gartenschere nach Anspruch 1,
dadurch gekennzeichnet, daß der Kopf (64) der Gelenkschraube (62) einen Innensechskant (66) trägt.

6. Gartenschere nach Anspruch 1 mit lösbaren Messern (24, 32),
dadurch gekennzeichnet, daß der ringscheibenförmige Gelenkabschnitt (20) des Obergriffs einen sichelförmigen Fortsatz (22) aufweist, dessen Umrißform der Umrißform des Gegenmessers (24) entspricht und der dieses vollflächig abstützt und daß der ringscheibenförmige Gelenkabschnitt (28) des Untergriffs einen fingerartigen Fortsatz (30) aufweist, der den hinteren unteren Bereich der Messerklinge (32) abstützt.

7. Gartenschere nach Anspruch 6,
dadurch gekennzeichnet, daß das Gegenmesser (24) an dem der Schneide der Messerklinge (24) zugewandten Randabschnitt (40) mit der Ebene des ringscheibenförmigen Gelenkabschnitts (20) fluchtet und längs einer Kante (42) in dem nach außen weisenden Bereich (44) zurückversetzt ist.

## Claims

1. Horticultural pruner having an upper handle (10) equipped with a counterblade (24), a lower handle (14) equipped with a knife blade (32), and a pruner joint incorporating two annular disk-shaped articulating sections (20, 28) which act as bearing surfaces for another and are united with the knife blade (32) and the counterblade (24), and a screw bushing (50) with an articulation screw (62) screwed into it, and means (46) for absorbing the radial load and means independent thereof for absorbing the axial load,
characterised in that arranged on the upper face of the pruner, outside the cutting range of the knife blade (32) and counterblade (24), on the circumference of the annular-disk-shaped articulating sections (20, 28) of the upper handle (10) and lower handle (14), are respective incisions (80 and 82 respectively) which can be made to coincide and operate as wire cutters.

2. Horticultural pruner according to claim 1,
characterised in that the means for absorbing the axial load are constituted by dish-shaped heads (52, 64) respectively of the screw bushing (50) and articulation screw (62), the slightly convex surface of which merges into the surface of the annular-disk-shaped articulating sections (20, 28), that a locking disk (72) on the head (64) of the clamping screw is tautened axially against the annular-disk-shaped articulating section (28), that the said ring-shaped disk has on its outer circumference a locking means (76) which co-operates with a locking means (78) on the annular-disk-shaped articulating section (28), and that the surface of the locking disk (72) together with the surface of the head (64) constitutes the slightly convex articulating dish which merges into the articulating section (28).

3. Horticultural pruner according to claim 1,
characterised in that the means for absorbing the radial load consist of a steel bush (46) which is pressed into a concentric bore in the annular-disk-shaped articulating section (20) of the upper handle and provides a mount for the counterblade (24) and the knife blade (32).

4. Horticultural pruner according to claim 2,
characterised in that the steel bush (46) is anchored by a flange (48) in a stepped recess in the annular-disk-shaped articulating section (20).

5. Horticultural pruner according to claim 1,
characterised in that the head (64) of the articulation screw (62) bears a hexagonal socket (66).

6. Horticultural pruner according to claim 1 with removable blades (24, 32),
characterised in that the annular-disk-shaped articulating section (20) of the upper handle features a sickle-shaped continuation piece (22) whose outline shape matches the outline shape of the counterblade (24) and which supports the latter over its whole surface, and that the annular-disk-shaped articulating section (28) of the lower handle features a finger-like continuation piece (30) which supports the rear lower region of the knife blade (32).

7. Horticultural pruner according to claim 6,
characterised in that on the peripheral section (40) nearest the cutting face of the knife blade (24) the counterblade (24) is flush with the plane of the annular-disk-shaped articulating section (20) and in the outward-pointing region (44) is set back along one edge (42).

## Revendications

1. Sécateur comprenant une branche supérieure (10) munie d'une lame d'appui (24), une branche inférieure (14) munie d'une lame tranchante (32) et une articulation présentant deux parties (20, 28) en forme de disques annulaires se déplaçant l'une sur l'autre qui sont à l'intersection de la lame tranchante (32) et de la lame d'appui (24), une douille taraudée (50) dans laquelle est vissée une vis d'articulation (62), des moyens (46) destinés à absorber la charge axiale et des moyens indépendants des précédents destinés à absorber la charge axiale, caractérisé en ce que sur le dessus du sécateur, en dehors de la zone de coupe de la lame tranchante (32) et de la lame d'appui (24), sur le pourtour des parties d'articulation en forme de disques annulaires (20, 28) de la branche supérieure (10) et de la branche inférieure (11) sont ménagées des entailles (respectivement 80 et 82) que l'on peut faire coïncider et qui peuvent servir de coupe-fil.

2. Sécateur selon la revendication 1, caractérisé en ce que les moyens destinés à absorber la charge axiale sont formés par des têtes en forme de disque (52, 64) respectivement de la douille taraudée (50) et de la vis d'articulation (62), dont la surface faiblement convexe devient la surface des parties articulées en forme de disques annulaires (20, 28), en ce qu'un disque d'arrêt (72) est serré dans la direction axiale par la tête (64) de la vis de serrage contre la partie d'articulation en forme de disque annulaire (28), en ce que ce disque d'arrêt perte sur le pourtour extérieur un dispositif d'enclenchement (76) qui coopère avec un pendant (78) de la partie d'articulation en forme de disque annulaire (28), et en ce que la surface du disque d'arrêt (72) forme avec la surface de la tête (64) un disque d'articulation faiblement convexe qui devient la partie d'articulation (28).

3. Sécateur selon la revendication 1, caractérisé en ce que les moyens destinés à absorber la charge radiale sont composés d'une douille d'acier (46) qui est enfoncée dans un perçage concentrique de la partie d'articulation en forme de disque annulaire (20) de la branche supérieure et qui perte la lame d'appui (24) et la lame tranchante (32).

4. Sécateur selon la revendication 2, caractérisé en ce que la douille d'acier (46) est fixée par une bride (48) dans un évidement étagé de la partie d'articulation en forme de disque annulaire (20).

5. Sécateur selon la revendication 1, caractérisé en ce que la tête (64) de la vis d'articulation (62) comporte un six-pans creux (66).

6. Sécateur selon la revendication 1 à lames amovibles (24, 32), caractérisé en ce que la partie d'articulation en forme de disque annulaire (20) de la branche supérieure présente un prolongement en forme de faucille (22) dont le contour correspond à celui de la lame d'appui (24) et qui supporte entièrement cette dernière, et en ce que la partie d'articulation en forme de disque annulaire (28) de la branche inférieure présente un prolongement en forme de doigt (30) qui supporte la partie inférieure arrière de la lame tranchante (32).

7. Sécateur selon la revendication 6, caractérisé en ce que la lame d'appui (24) est en alignement avec le plan de la partie d'articulation en forme de disque annulaire (20) dans la zone périphérique (40) tournée vers le tranchant de la lame tranchante (24) et est en retrait le long d'une arête (42) dans la zone pointant vers l'extérieur (44).
